Europäisches Patentamt

European Patent Office

Office européen des brevets

(11) Numéro de publication: **0 304 384**
**A1**

(12) **DEMANDE DE BREVET EUROPEEN**

(21) Numéro de dépôt: **88460017.2**

(22) Date de dépôt: **09.08.88**

(51) Int. Cl.⁴: **F 02 B 39/10**
**F 02 B 37/14**

(30) Priorité: **19.08.87 FR 8711790**

(43) Date de publication de la demande:
**22.02.89 Bulletin 89/08**

(84) Etats contractants désignés: **DE GB IT**

(71) Demandeur: **Le Coq, Pierre**
**23 rue Pen an-Croissant**
**F-22200 Graces Guingamp (FR)**

(72) Inventeur: **Le Coq, Pierre**
**23 rue Pen an-Croissant**
**F-22200 Graces Guingamp (FR)**

(74) Mandataire: **Le Guen, Louis François**
**CABINET Louis LE GUEN 38, rue Levavasseur B.P. 91**
**F-35802 Dinard Cédex (FR)**

(54) Perfectionnements à un turbo-compresseur de suralimentation d'un moteur à combustion interne.

(57) L'invention consiste à entraîner le turbo-compresseur à bas régime, lors de l'accélération, pour en diminuer sensiblement le temps de réponse.

L'axe (4) du turbo-compresseur est couplé, de façon débrayable à un axe (7) entraîné par un moteur électrique (13). Lors d'une accélération prolongée à bas régime, le moteur (13) démarre, puis les axes (4) et (7) sont accouplés tant qu'ils n'ont pas atteint une vitesse de rotation au moins supérieure au régime d'accrochage du turbo-compresseur.

Dans une forme de réalisation préférée de l'invention, le moyen d'embrayage entre l'axe (4) et l'axe (7) est un embrayage à inertie et vissage-dévissage.

FIG.2

EP 0 304 384 A1

## Description

### Perfectionnements à un turbo-compresseur de suralimentation d'un moteur à combustion interne

La présente invention concerne des perfectionnements et améliorations à un turbo-compresseur servant à suralimenter en air un moteur à combustion interne.

De manière classique, un turbo-compresseur monté sur un moteur à combustion interne comporte une turbine centripète reliée par un axe à un compresseur centrifuge qui aspire l'air ambiant à la pression atmosphérique et l'envoie sous pression à l'admission du moteur.

Pour assurer un débit suffisant, un tel compresseur doit tourner à régime très élevé, de l'ordre de 100 000 tours/minute. En deçà d'un certain régime, dit "régime d'accrochage", et qui se situe aux alentours de 60 000 tours/minute, le débit du turbo-compresseur est insuffisant et le moteur fonctionne en phase atmosphérique. Au-dessus de ce régime, le moteur fonctionne en phase suralimentée. Le passage d'un état de fonctionnement à l'autre dépend de la pression des gaz d'échappement, donc du régime moteur. Il se fait brutalement en cours d'accélération ou de décélération. En cours d'accélération, le couple augmente brutalement, ce qui produit des à-coups néfastes pour les pièces mécaniques et désagréables pour le conducteur.

Un objet de la présente invention consiste à prévoir un moyen de diminuer sensiblement le temps de réponse du turbo-compresseur à l'accélération.

Cet objet est atteint en associant au turbo-compresseur, par l'intermédiaire d'un embrayage, un moyen de lancement qui, en réponse à une accélération, est mis en route et embrayé jusqu'à ce que le turbo-compresseur atteigne un régime au moins égal au régime d'accrochage, le moyen de lancement étant alors débrayé dès que la pression des gaz d'échappement est suffisante pour maintenir le régime du turbo-compresseur au moins égal à celui qu'il a acquis. Bien entendu, le moyen de lancement ne doit être déclenchable que si le moteur est en marche et si le régime du turbo-compresseur est inférieur au régime d'accrochage. De plus, comme le turbo-compresseur tourne dès que le moteur démarre, il est préférable, sinon nécessaire, que le moyen de lancement ne soit embrayé que lorsqu'il a atteint une certaine vitesse de rotation, la plus proche possible de celle du turbo-compresseur.

Pour que le système soit efficace, il faut que les moyens de transmission n'engendrent pas trop d'inertie et de résistances mécaniques pour le turbo-compresseur, afin de ne pas entraver son fonctionnement une fois le moyen de lancement débrayé et au repos.

Selon une caractéristique de l'invention, le dispositif comprend:
- un premier moyen d'accouplement à une extrémité de l'axe du turbo-compresseur,
- un second moyen d'accouplement porté par un axe couplé à l'arbre d'un moteur électrique, de telle sorte que lorsque ledit moteur électrique tourne à son régime, ledit axe tourne à une vitesse au moins supérieure au régime d'accrochage du turbo-compresseur,
- un moyen d'embrayage desdits premier et second moyens d'accouplement,
- un premier contacteur sur le circuit d'alimentation du moteur électrique, qui est ouvert si le moteur à combustion interne est à l'arrêt et fermé s'il est en marche,
- un second contacteur sur ledit circuit d'alimentation, qui est ouvert si la pression d'admission d'air au moteur dépasse un certain seuil et qui est fermé si elle est inférieure à ce seuil,
- un troisième contacteur à temporisation sur ledit circuit d'alimentation, dont la fermeture est commandée par l'accélérateur, et
- des moyens pour embrayer ledit moyen d'embrayage après la mise en route du moteur électrique et pour le débrayer à l'arrêt de ce dernier ou si le turbo-compresseur tourne plus vite que ledit axe couplé à l'arbre dudit moteur électrique.

Selon une autre caractéristique de l'invention, ledit moyen d'embrayage est un embrayage électromagnétique et ledit moyen pour débrayer si le turbo-compresseur tourne plus vite que ledit axe couplé à l'arbre du moteur électrique est un contacteur tachymétrique monté sur le circuit d'alimentation dudit embrayage et commandé par la vitesse de rotation du turbo-compresseur.

Selon une autre caractéristique de l'invention, lesdits premier et second moyens d'accouplement forment un embrayage par inertie et vissage/dévissage.

Dans ce cas, le moyen d'accouplement sur l'axe couplé au moteur électrique consiste en une cuvette conique engagée sur une rampe hélicoïdale à une extrémité de l'axe, et rappelée sur l'axe par un ressort de rappel. Le moyen d'accouplement à l'extrémité de l'axe du turbo-compresseur est un cône. Lors du démarrage du moteur électrique, par inertie, la cuvette se dévisse et progresse en translation jusqu'à être en prise avec le cône de l'axe du turbo-compresseur. Dès que ce dernier arrive à la vitesse de l'axe couplé au moteur électrique, la cuvette conique est rappelée par le ressort de rappel. L'avantage de ce système est que la mise en prise de l'embrayage est décalée automatiquement par rapport au démarrage du moteur électrique et que le débrayage est également automatique.

Selon une autre caractéristique de l'invention, ledit premier contacteur est un contacteur manométrique commandé par la pression dans le circuit de lubrification du moteur à combustion interne.

Selon une autre caractéristique de l'invention, ledit second contacteur est un contacteur manométrique commandé par la pression dans le circuit d'admission d'air.

Comme il existe une corrélation entre la pression d'admission d'air au moteur et la pression des gaz d'échappement, ledit second contacteur peut être remplacé par un contacteur manométrique commandé par la pression dans le circuit des gaz d'échappement.

Selon une autre caractéristique de l'invention, un interrupteur manuel est monté sur le circuit d'alimentation dudit moteur électrique.

Selon une autre caractéristique de l'invention, un interrupteur commandé par la clé de contact du véhicule est encore monté sur le circuit d'alimentation dudit moteur électrique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

la Fig. 1 est une vue schématique d'un turbo-compresseur pourvu du dispositif de l'invention selon un premier exemple de réalisation,

la Fig. 2 est une vue schématique d'un turbo-compresseur pourvu du dispositif de l'invention selon un second exemple de réalisation, et

la Fig. 3 est une vue schématique du circuit d'alimentation du moteur électrique du dispositif de l'invention selon le premier exemple de réalisation.

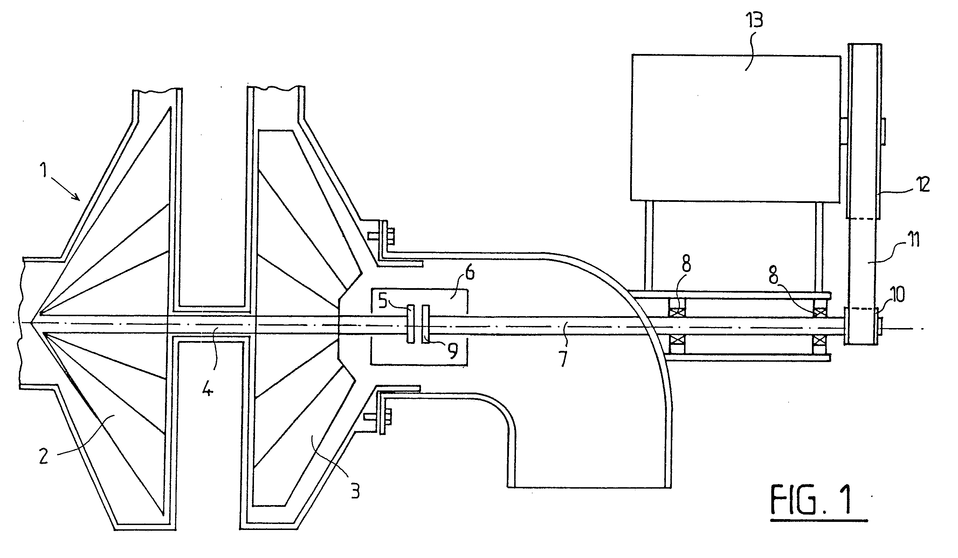

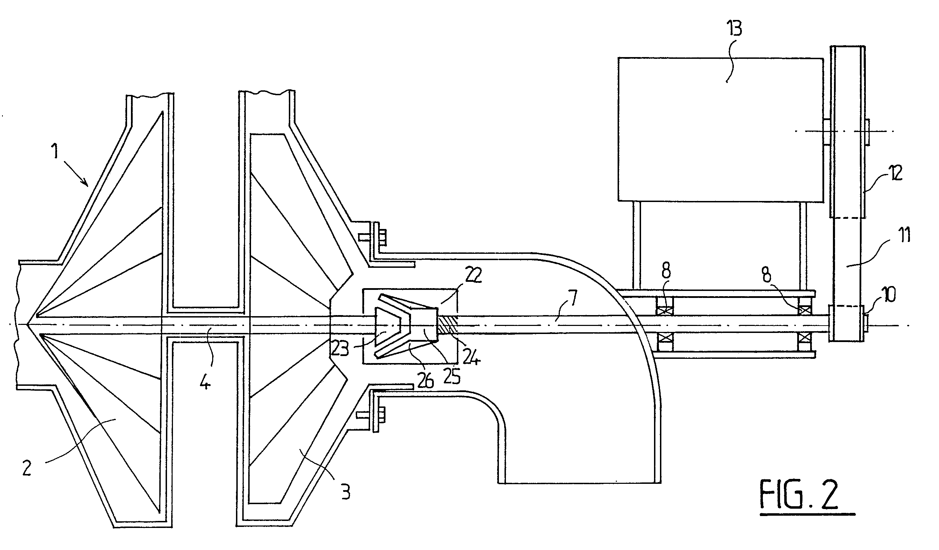

Le turbo-compresseur 1, Figs. 1 et 2, comporte classiquement une turbine motrice centripète 2 montée dans le circuit des gaz d'échappement et une turbine de compresseur centrifuge 3 montée dans le circuit d'admission d'air au moteur à combustion interne, non montré. Les turbines 2 et 3 sont montées sur un même axe 4 porté dans un palier médian suffisamment long pour faire écran thermique entre les chambres des deux turbines.

Du côté de la turbine 3, l'extrémité de l'axe 4 est prolongée par rapport à cette dernière et porte un disque 5, Fig. 1, qui forme le premier élément d'accouplement dans un embrayage magnétique 6.

Au-delà du disque 5, aligné avec l'axe 4, se trouve un axe 7 qui passe à travers la conduite d'admission de l'air et est porté par des paliers 8. La première extrémité de l'axe 7, adjacente au disque 5, porte un disque 9 qui constitue le second élément d'accouplement dans l'embrayage magnétique 6.

La seconde extrémité de l'axe 7 porte une poulie 10, de préférence crantée, couplée par une courroie 11 à une autre poulie 12, de préférence crantée également et beaucoup plus grande, montée sur l'arbre d'un moteur électrique 13. La démultiplication est telle qu'au régime normal du moteur 13, correspond une vitesse de rotation de l'axe 7 au moins supérieure au régime d'accrochage du turbo-compresseur 1.

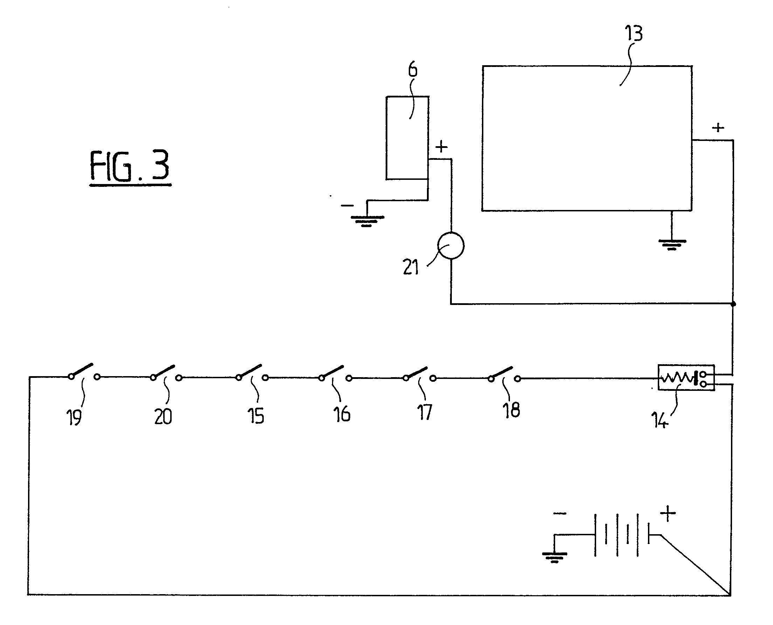

Le moteur électrique 13 est alimenté par la batterie du véhicule. Le circuit d'alimentation du moteur 13 est fermé au moyen d'un relais 14 en amont duquel sont montés en série un certain nombre de contacteurs, Fig. 3. Un contacteur manométrique 15, commandé par la pression dans le circuit de lubrification du moteur à combustion interne, est fermé lorsque ledit moteur est en marche et ouvert lorsqu'il est arrêté. Il évite qu'on puisse faire fonctionner le turbo-compresseur quand ledit moteur est à l'arrêt. Un contacteur manométrique 16, commandé par la pression d'admission d'air au moteur s'ouvre dès que ladite pression dépasse un certain seuil, ledit seuil correspondant à un régime moteur pour lequel le turbo-compresseur a un régime supérieur au régime d'accrochage et ne nécessite pas d'entraînement. Le contacteur 16 évite qu'en accélérant dans ces conditions, on ne déclenche le moteur électrique 13 et l'embrayage 6. A noter qu'au lieu d'être commandé par la pression d'admission d'air au moteur, le contacteur 16 pourrait être commandé par la pression des gaz d'échappement. Bien-sûr, le contacteur 16 se ferme si la pression redescend au-dessous dudit seuil. Un contacteur tachymétrique 17 est commandé par la vitesse de rotation du turbo-compresseur 1. Il s'ouvre lorsque celle-ci dépasse le régime d'accrochage et, inversement, se ferme si elle lui est inférieure. Il évite au moteur électrique 13 d'être entraîné en sur-régime par le turbo-compresseur. Un contacteur à temporisation 18 est commandé par l'accérateur. Lors d'une accélération franche, il se ferme. A la Fig. 1, sont encore représentés deux contacteurs 19 et 20. Le contacteur 19 est commandé par la clé de contact et le contacteur 20 est un interrupteur manuel.

Le relais 14 ferme le circuit d'alimentation au moteur 13 quand tous les contacteurs 15 à 20 sont fermés. Par le relais 14, est également fermé le circuit d'alimentation de l'embrayage électromagnétique 6, ledit circuit comportant en outre un élément à retard 21 pour différer légèrement la mise en prise des disques 5 et 9 par rapport au démarrage du moteur 13.

En fonctionnement, le moteur tournant à bas régime, le turbo-compresseur tourne, lui, à une vitesse inférieure à son régime d'accrochage. Les contacteurs 15 à 17 et 19, 20 étant fermés, si l'on donne alors un coup d'accélérateur, le contacteur 18 se ferme et le relais 14 ferme le circuit d'alimentation du moteur 13 qui démarre instantanément. L'alimentation à l'embrayage 6 est légèrement différée, par l'élément 21, de sorte que lorsque l'accouplement s'établit entre les disques 5 et 9, l'axe 7 tourne déjà à une certaine vitesse et que le turbo-compresseur 1 n'est pas trop ralenti. En pratique, on s'arrange pour que le décalage soit tel que la vitesse de rotation de l'axe 7 soit la plus proche possible de celle du turbo-compresseur 1 lors de l'accouplement. Le turbo-compresseur 1, alors entraîné par le moteur électrique 13, atteint rapidement un régime supérieur au régime d'accrochage, à partir duquel le contacteur tachymétrique 17 se met en position d'ouverture, si bien que l'alimentation au moteur 13 et à l'embrayage 6 est coupée.

La temporisation sur le contacteur 18 en assure la fermeture pendant une durée que dépasse le moment où le contacteur tachymétrique 17 s'ouvre si l'accélération est continue. Ladite temporisation est alors indispensable pour ramener le contacteur 17 en position d'ouverture.

Si l'accélération a été brutale et aussitôt suivie d'un relâchement, il se peut que le turbo-compresseur 1 n'ait pas eu le temps d'atteindre le régime pour lequel le contacteur tachymétrique 17 s'ouvre. C'est, dans ce cas, le contacteur 18 qui, au terme de la temporisation, coupe l'alimentation au moteur 13 et à l'embrayage 6. De préférence, le système de temporisation sur le contacteur 18 est électronique, mais il peut être également pneumatique ou hydraulique.

Le dispositif de la Fig. 2 ne diffère de celui de la Fig. 1 que par la nature de l'embrayage, c'est pourquoi les mêmes références sont utilisées pour désigner les mêmes éléments.

Dans cet exemple de réalisation, l'embrayage 6 est un remplacé par un embrayage à inertie 22.

A la place du disque 5, est monté en bout de l'axe 4 un élément conique 23 à surface de friction externe, dont la pointe est dirigée vers ladite première extrémité de l'axe 7. A partir de cette dernière, et sur une courte longueur, l'axe 7 présente à sa périphérie une rampe hélicoïdale 24 sur laquelle est engagée le fond d'une cuvette tronconique 25 à surface interne de friction. La cuvette 25 est coaxiale avec le cône 23 et son ouverture fait face à la pointe de ce dernier. La cuvette 25 est rappelée sur l'axe 7, c'est-à-dire en position écartée de ladite première extrémité, par un ressort non représenté. Au repos, elle est dans cette position. Dès que le moteur 13 démarre, la cuvette 25, en raison de son inertie, progresse vers ladite première extrémité en se dévissant sur la rampe 24, jusqu'à ce que sa surface de friction soit en contact avec celle du cône 23. Alors, à son inertie s'ajoute celle du turbo-compresseur 1 si, à ce moment, il tourne moins vite que l'axe 7. L'embrayage 22 est en prise tant que le moteur 13 ne tourne pas à son régime normal. Quand celui-ci est atteint, la cuvette 25 est rappelée sur l'axe 7 par son ressort de rappel et les axes 4 et 7 sont donc désaccouplés.

Comme le turbo-compresseur tourne dès que le moteur à combustion interne a démarré, il peut arriver qe sa vitesse de rotation soit supérieure à celle de l'axe 7 quand la cuvette 25 arrive en prise sur le cône 23. Dans ce cas, il est à craindre que la cuvette 25, accélérée en rotation par le cône 23, se revisse sur l'axe 7, ce qui empêcherait l'accouplement des axes 4 et 7. On apporte une solution à ce problème en prévoyant sur la surface externe de la cuvette 25 des ailettes 26 qui augmentent son inertie. Quand l'axe 7 et la cuvette 25 sont à l'arrêt, les ailettes 26 constituent des aubes directionnelles pour l'air aspiré dans le circuit d'admission, qui ne nuisent donc pas au rendement.

Ce genre d'embrayage est parfaitement approprié au dispositif de l'invention. En effet, le décalage dans le temps entre le démarrage du moteur électrique 13 et la mise en prise est obtenu mécaniquement: c'est le temps de déplacement de la cuvette 25 sur la rampe hélicoïdale. De même, le débrayage a lieu automatiquement dès que le moteur électrique a atteint son régime maximal. Donc, seul le moteur électrique 13 nécessite d'être alimenté et le compteur tachymétrique 17 n'est plus nécessaire.

Le dispositif de l'invention diminue nettement les temps de réponse du turbo-compresseur. La turbine 2 ne freine plus les gaz à l'échappement et le "bourrage" du turbo-compresseur est ainsi évité. De plus, le turbo-compresseur entraîné produit aussitôt une compression à l'admission et une diminution de pression à l'échappement. Il en résulte un meilleur rendement du moteur et une puissance et un couple accrus à bas régime.

## Revendications

1) Turbo-compresseur pour suralimenter en air un moteur à combustion interne, pourvu d'un dispositif pour l'entraîner à bas régime, caractérisé en ce que ledit dispositif comprend:
- un premier moyen d'accouplement à une extrémité de l'axe (4) du turbo-compresseur (1),
- un second moyen d'accouplement porté par un axe (7) couplé à l'arbre d'un moteur électrique (13), de telle sorte que lorsque ledit moteur tourne à son régime, ledit axe (7) tourne à une vitesse au moins supérieure au régime d'accrochage du turbo-compresseur (1),
- un moyen d'embrayage desdits premier et second moyens d'accouplement,
- un premier contacteur (15) sur le circuit d'alimentation du moteur électrique (13), qui est ouvert si le moteur à combustion interne est à l'arrêt et fermé s'il est en marche,
- un second contacteur (16) sur ledit circuit d'alimentation, qui est ouvert si la pression d'admission d'air au moteur dépasse un certain seuil, et qui est fermé si elle est inférieure à ce seuil,
- un troisième contacteur à temporisation (18) sur ledit circuit d'alimentation, dont la fermeture est commandée par l'accélérateur, et
- des moyens pour embrayer ledit moyen d'embrayage après le démarrage du moteur électrique (13) et pour le débrayer à l'arrêt de ce dernier ou si le turbo-compresseur (1) tourne plus vite que ledit axe (7) couplé à l'axe dudit moteur électrique (13).

2) Turbo-compresseur selon la revendication 1, caractérisé en ce que ledit moyen d'embrayage est un embrayage électromagnétique (6).

3) Turbo-compresseur selon la revendication 2, caractérisé en ce que ledit moyen pour débrayer si le turbo-compresseur tourne plus vite que ledit axe (7) couplé à l'arbre du moteur électrique (13) est un contacteur tachymétrique (17) monté sur le circuit d'alimentation dudit embrayage (6) et commandé par la vitesse du turbo-compresseur (1).

4) Turbo-compresseur selon la revendication 1, caractérisé en ce que lesdits premier et second moyens d'accouplement (23, 25) forment un embrayage (22) par inertie et vissage/dévissage.

5) Turbo-compresseur selon l'une des revendications 1 à 4, caractérisé en ce que le premier contacteur (15) est un contacteur manométrique commandé par la pression dans le circuit de lubrification du moteur à combustion interne.

6) Turbo-compresseur selon l'une des revendications 1 à 5, caractérisé en ce que ledit second contacteur (16) est un contacteur manométrique commandé par la pression dans le circuit d'admission d'air.

7) Turbo-compresseur selon l'une des revendications 1 à 5, caractérisé en ce que ledit second contacteur (16) est un contacteur manométrique commandé par la pression dans le circuit des gaz d'échappement.

8) Turbo-compresseur selon l'une des revendications 1 à 7, caractérisé en ce qu'un interrupteur manuel (20) est monté sur le circuit d'alimentation dudit moteur électrique (13).

9) Turbo-compresseur selon l'une des revendications 1 à 8, caractérisé en ce qu'un contacteur (19) commandé par la clé de contact du véhicule est encore monté sur le circuit d'alimentation dudit moteur électrique (13).

FIG. 1

EP 0 304 384 A1

FIG. 2

EP 0 304 384 A1

# FIG. 3

EP 0 304 384 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-2 912 950 (U. ESSERS)<br>* Page 5, ligne 30 - page 6, ligne 31; figures 1-3 *<br>--- | 1,2 | F 02 B 39/10<br>F 02 B 37/14 |
| A | FR-A-2 488 330 (M. CHAUVIERRE)<br>* Page 2, ligne 7 - page 3, ligne 12; plan unique *<br>--- | 1,3 | |
| A | FR-A-2 479 899 (FIAT AUTO S.p.A.)<br>* Page 2, ligne 27 - page 3, ligne 17; figure 1 *<br>--- | 1 | |
| A | EP-A-0 079 100 (MICROTURBO S.A.)<br>----- | | |

DOMAINES TECHNIQUES RECHERCHES (Int. Cl.4)

F 02 B
F 02 C

Le présent rapport a été établi pour toutes les revendications

| Lieu de la recherche | Date d'achèvement de la recherche | Examinateur |
|---|---|---|
| LA HAYE | 17-10-1988 | WOHLRAPP R.G. |

EPO FORM 1503 03.82 (P0402)